# FASCICULE DE BREVET EUROPEEN

(11) **EP 1 657 085 B1**
(45) Date de publication et mention de la délivrance du brevet: **02.11.2011**
(21) Numéro de dépôt: 05292344.8
(22) Date de dépôt: 04.11.2005
(51) Int. Cl.: B60G 21/055, F16B 2/06

(54) **Agencement pour la liaison entre un capteur angulaire et une barre anti-devers**
Vorrichtung zum Verbinden eines Winkelsensors mit einem Stabilisator
Device for connecting an angular sensor and a torsion bar

(30) Priorité: 15.11.2004 FR 0412096
(43) Date de publication de la demande: 17.05.2006
(73) Titulaire: VALEO VISION, 93012 Bobigny Cedex (FR)
(72) Inventeur: Bailly, Stéphane, 49100 Angers (FR); Bariller, Florian, 49540 Tigne (FR)
(74) Mandataire: Tran, Chi-Hai

(56) Documents cités:
- GB-A- 2 028 513
- US-A- 2 757 376
- US-A- 4 033 605
- US-A- 4 436 318

## Description

La présente invention concerne un agencement pour la liaison entre un capteur angulaire et une barre anti-devers.

La présente invention concerne plus particulièrement un agencement pour la liaison entre un capteur angulaire et une barre anti-dévers d'un véhicule automobile, du type dans lequel le capteur est fixé sur la caisse du véhicule et comporte un levier de mesure commandé en pivotement autour de son axe par un tronçon pivotant de la barre anti-devers, du type dans lequel le levier est lié en pivotement à la barre anti-devers au moyen d'une patte d'accrochage portée par une bride qui est fixée par serrage sur le tronçon pivotant.

Ce type d'agencement est utilisé en particulier pour permettre la correction d'angle sur site des projecteurs d'éclairage du véhicule.

On constate qu'une variation de la hauteur d'un essieu par rapport à la caisse du véhicule entraîne un pivotement proportionnel de la barre anti-devers autour de son axe.

Par conséquent, en liant le pivotement de la barre anti-devers avec le pivotement du levier de mesure d'un capteur angulaire, il est possible de mesurer indirectement une variation de l'assiette du véhicule.

A cet effet, la bride comporte généralement un corps principal qui porte la patte d'accrochage et une broche en forme de "U" qui est reçue dans le corps principal et qui est serrée contre la barre anti-devers au moyen de deux écrous vissés sur les extrémités des branches du "U".

Ce type d'agencement n'est pas entièrement satisfaisant car le montage de la bride sur la barre anti-devers nécessite, pour l'opérateur, l'utilisation de ses deux mains ainsi que d'un outillage spécifique pour le positionnement et l'indexation angulaire de la bride sur la barre anti-devers.

Un tel agencement selon le préambule de la revendication 1 est connu du document US 2757376 A.

Or, l'emplacement de la bride sur la barre anti-devers est généralement un endroit peu accessible sous le véhicule, de sorte que le passage des deux mains, ainsi que de l'outillage extérieur, est particulièrement difficile.

Du fait de ces inconvénients, l'installation de la bride sur la barre anti-devers est longue et fastidieuse, ce qui est pénalisant pour le temps de cycle sur la chaîne de fabrication du véhicule, et donc pénalisant en terme de coûts de fabrication du véhicule.

La présente invention vise à remédier à ces inconvénients en proposant un agencement plus simple et plus facile à installer.

La présente invention vise aussi à diminuer le nombre de pièces constitutives de l'agencement.

Dans ce but, l'invention propose un agencement du type décrit précédemment, caractérisé en ce que la bride comporte :
- un socle qui porte la patte d'accrochage,
- une première et une seconde branches qui sont articulées sur le socle de manière à former une pince et qui sont sollicitées élastiquement vers une position pincée sur le tronçon pivotant.

Avantageusement, la bride comporte également :
- un élément d'écrou qui est solidaire de la première branche,
- une vis de serrage qui est vissée dans l'écrou à travers la seconde branche et qui prend appui sur une face de la seconde branche de manière à maintenir par serrage les deux branches en position pincée sur le tronçon pivotant.

Mais elle pourrait aussi comporter d'autres moyens de verrouillage, amovibles ou non.

Selon d'autres caractéristiques de l'invention :
- chaque branche comporte, à son extrémité opposée au socle, une rampe qui commande l'écartement des branches lors du montage de la bride sur le tronçon pivotant ;
- le tronçon pivotant comporte au moins un méplat, et en ce que au moins une branche comporte une encoche interne d'indexation formant une surface d'appui qui vient en contact plan sur plan contre le méplat en vue de permettre l'indexation angulaire de la bride autour du tronçon pivotant en position pincée ;
- chaque encoche d'indexation comporte deux portions d'extrémité de profil sensiblement complémentaire du profil arrondi du tronçon pivotant, et une portion intermédiaire plane complémentaire du méplat ;
- chaque branche comporte deux ailes parallèles qui s'étendent globalement orthogonalement vers l'intérieur par rapport à l'axe du tronçon pivotant, et chaque aile comporte une encoche d'indexation ;
- la seconde branche comporte un orifice oblong, dans le sens de la longueur de la branche, pour le passage de la vis de serrage ;
- dans un état de repos de la bride, une portion de la tige de la vis est en appui contre une extrémité de l'orifice oblong, du côté du socle, sous l'effet du rappel élastique des branches vers la position pincée ;
- le socle, les branches, et la patte d'accrochage sont réalisés venus de matière en une seule pièce ;
- la bride est réalisée en tôle ;
- l'élément d'écrou est un écrou rapporté qui est fixé sur la première branche avant le montage de la bride sur la barre anti-devers ;
- l'agencement comporte une biellette dont une première extrémité longitudinale est articulée sur l'extrémité libre du levier et dont une seconde extrémité longitudinale est articulée sur la patte d'accrochage.

L'invention concerne aussi le véhicule équipé de l'agencement décrit plus haut.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté qui représente schématiquement un agencement conforme aux enseignements de l'invention pour la liaison entre un capteur angulaire et une barre anti-devers ;
- la figure 2 est une vue en perspective éclatée qui représente une bride équipant l'agencement de la figure 1 ;
- la figure 3 est une vue de côté qui illustre schématiquement une position pincée de la bride avant montage ;
- la figure 4 est une vue similaire à celle de la figure 3 qui illustre une position intermédiaire de la bride pendant son montage sur la barre anti-devers ;
- la figure 5 est une vue similaire à celle de la figure 3 qui illustre une position pincée de la bride sur la barre anti-devers avant serrage de la vis qui l'équipe.

Dans la description qui suit, des éléments identiques, similaires ou analogues seront désignés par les mêmes références.

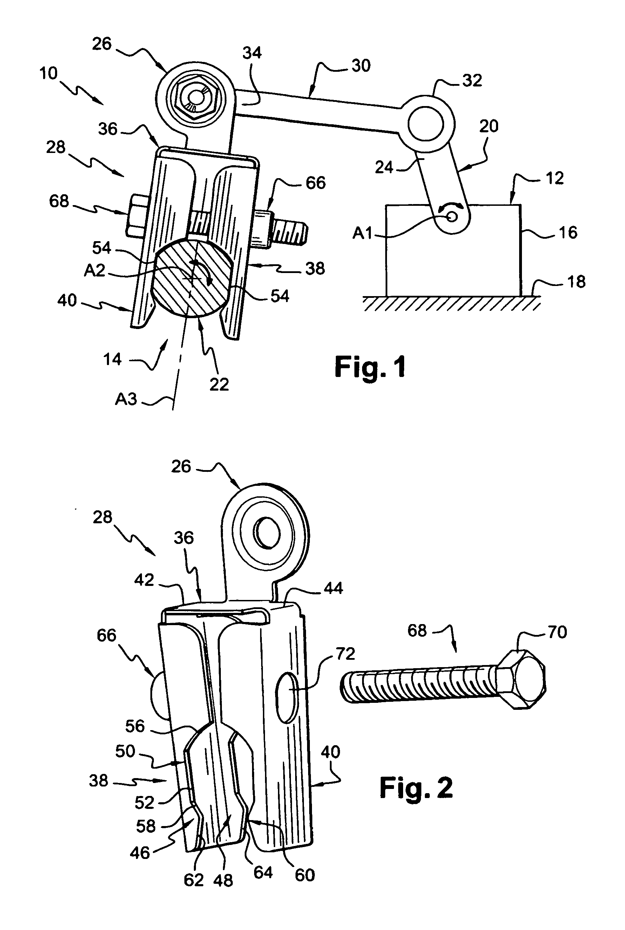

Sur la figure 1, on a représenté un agencement 10 pour la liaison entre un capteur angulaire 12 et une barre anti-dévers 14 d'un véhicule automobile.

De manière classique, le capteur angulaire 12 comporte un boîtier 16 qui est fixé sur la caisse 18 du véhicule automobile, et il comporte un levier 20 de mesure commandé en pivotement autour de son axe A1 par un tronçon pivotant 22, d'axe A2, de la barre anti-devers 14.

Le boîtier 16 du capteur angulaire 12 contient, par exemple, un circuit électrique imprimé (non représenté) muni d'une piste électrique résistive centrée sur l'axe A1 et un curseur de lecture (non représenté) lié en pivotement au levier 20, de manière que le capteur angulaire 12 produise un signal électrique représentatif de la position angulaire du tronçon pivotant 22 par rapport à la caisse 18 du véhicule.

L'extrémité libre 24 du levier 20 est liée au pivotement du tronçon 22 de la barre anti-devers 14 au moyen d'une patte d'accrochage 26 portée par une bride 28 qui est fixée par serrage sur le tronçon pivotant 22.

Plus précisément, l'agencement 10 comporte une biellette 30 dont une première extrémité longitudinale 32 est articulée sur l'extrémité libre 24 du levier 20 et dont une seconde extrémité longitudinale 34 est articulée sur la patte d'accrochage 26.

L'articulation se fait généralement au moyen d'une liaison du type rotule.

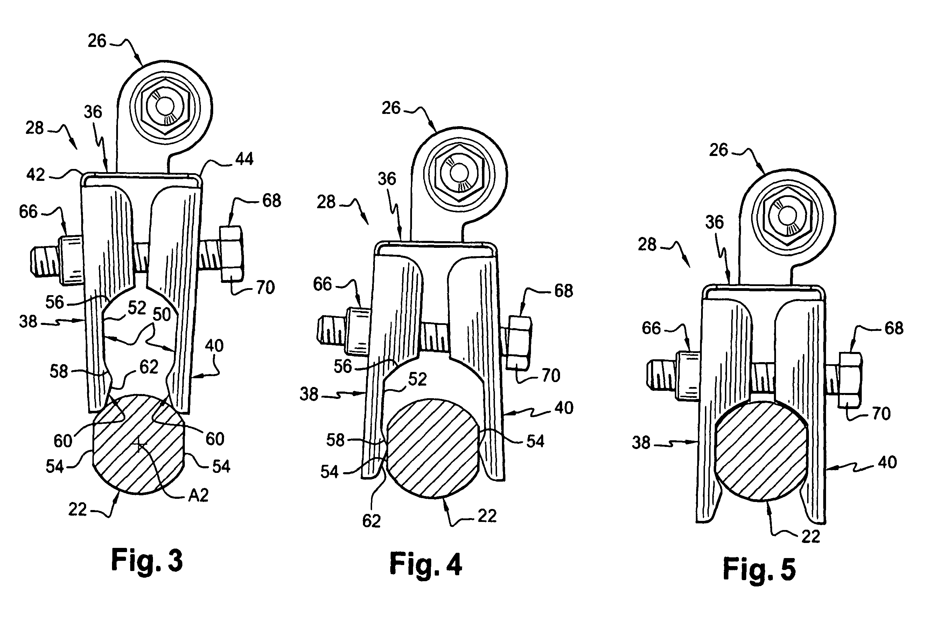

On décrit maintenant la structure de la bride 28, en particulier en considérant les figures 2 et 3.

Conformément aux enseignements de l'invention, la bride 28 comporte un socle 36 en forme de plaque qui porte la patte d'accrochage 26.

La patte d'accrochage 26 s'étend ici dans un plan sensiblement orthogonal au plan du socle 36.

La bride 28 comporte une première 38 et une seconde 40 branches qui sont articulées sur le socle 36 de manière à former une pince.

De préférence, le socle 36, les branches 38, 40, et la patte d'accrochage 26 qui constituent la bride 28 sont réalisés venus de matière en une seule pièce.

Avantageusement, la bride 28 est réalisée en tôle d'acier écroui, par découpage et par emboutissage.

Les deux branches 38, 40 s'étendent ici respectivement depuis deux bords d'extrémité 42, 44 parallèles et opposés du socle 36, globalement vers le bas en considérant les figures.

Les deux branches 38, 40 sont agencées ici de part et d'autre de la patte d'accrochage 26 qui s'étend globalement vers le haut, depuis un bord longitudinal du socle 36 reliant les deux bords d'extrémité 42, 44.

Les bords d'extrémité 42, 44 du socle 36 forment ici des charnières permettant l'articulation des branches 38, 40 par rapport au socle 36.

Dans la suite de la description, des éléments seront qualifiés d'interne ou d'externe en fonction de leur orientation suivant une direction globalement normale, par rapport à un plan axial médian A3 passant par l'axe A2 du tronçon pivotant 22.

Selon le mode de réalisation représenté ici, chaque branche 38, 40 comporte deux ailes 46, 48 parallèles qui s'étendent globalement orthogonalement vers l'intérieur, c'est-à-dire perpendiculairement au plan axial médian A3.

Les deux ailes 46, 48 d'une même branche 38, 40 sont ici sensiblement symétriques par rapport à un plan de symétrie orthogonal à l'axe A2 du tronçon pivotant 22.

Chaque branche 38, 40 a ainsi un profil globalement en forme de "U", selon un plan de section passant par l'axe A2 du tronçon pivotant 22 et perpendiculaire au plan axial médian A3.

Chaque aile 46, 48 d'une branche 38, 40 comporte ici une encoche 50 interne d'indexation formant une surface d'appui 52 qui vient en contact plan sur plan contre un méplat 54 aménagé en vis-à-vis dans la surface axiale externe du tronçon pivotant 22.

La surface d'appui 52 est ici constituée par le bord interne de l'aile 46, 48 associée en vis-à-vis du méplat 54.

De préférence, chaque encoche 50 d'indexation comporte deux portions d'extrémité 56, 58 de profil sensiblement complémentaire du profil arrondi d'une section du tronçon pivotant 22, la portion intermédiaire entre les deux portions d'extrémité 56, 58 constituant la surface d'appui 52 de l'encoche 50 d'indexation.

Avantageusement, chaque branche 38, 40 comporte, à son extrémité opposée au socle 36, une rampe 60 qui commande l'écartement des branches 38, 40 lors du montage de la bride 28 sur le tronçon pivotant 22.

Chaque rampe 60 est constituée ici par les portions d'extrémité distale 62, 64, par rapport au socle 36, des bords internes des deux ailes 46, 48.

Chaque portion d'extrémité distale 62, 64 est ici sensiblement rectiligne et inclinée vers le socle 36 et vers l'intérieur.

Les deux branches 38, 40 sont sollicitées élastiquement vers une position pincée sur le tronçon pivotant 22.

Dans l'exemple représenté, le rappel élastique est produit par la déformation élastique du matériau formant les articulations des branches 38, 40 sur le socle 36.

Ainsi, à l'état de repos de la bride 28, l'écartement entre les deux branches 38, 40 est tel que la distance entre les deux surfaces d'appui 52 est inférieure à la distance entre les deux méplats 54, comme on peut le voir sur la figure 3.

Selon une autre caractéristique de l'invention, un élément d'écrou 66 est solidaire de la première branche 38.

L'élément d'écrou 66 est constitué ici par un écrou rapporté qui est fixé sur la première branche 38, avant le montage de la bride 28 sur la barre anti-devers 14.

L'écrou 66 est, par exemple, serti dans la face externe de la première branche 38.

Selon encore une autre caractéristique de l'invention, une vis 68 de serrage est vissée dans l'écrou 66 à travers la seconde branche 40.

La vis 68 est munie d'une tête 70 qui prend appui sur la face externe de la seconde branche 40 de manière à maintenir par serrage les deux branches 38, 40 en position pincée sur le tronçon pivotant 22.

A cet effet, un orifice oblong 72 est aménagé dans la seconde branche 40. Cet orifice 72 s'étend dans le sens de la longueur de la seconde branche 40 et il permet le passage de la vis 68.

On note que la vis 68 s'étend ici suivant une direction globalement orthogonale aux deux branches 38, 40, parallèlement au socle 36. Par rapport à la direction générale des branches 38, 40, la vis 68 est agencée entre les encoches d'indexation 50 et le socle 36.

Le montage de la bride 28 sur le tronçon pivotant 22 de la barre anti-devers 14 est réalisé de la manière suivante.

La bride 28 est livrée sur la chaîne de montage du véhicule pré-assemblée, c'est-à-dire que l'écrou 66 est déjà serti sur la première branche 38, et la vis 68 est vissée dans l'écrou 66.

De préférence, l'ensemble de l'agencement 10, c'est-à-dire le capteur angulaire 12, la biellette 30, la bride 28 sont livrés préassemblés.

Ainsi, il suffit de fixer le capteur angulaire 12 sur la caisse 18 et de serrer la bride 28 sur la barre anti-devers 14 pour finaliser l'assemblage sur le véhicule.

On note que, avant le montage sur la barre anti-devers 14, le serrage de la vis 68 est tel qu'il permet un écartement suffisant des branches 38, 40 pour permettre l'emboîtement de la bride 28 sur le tronçon pivotant 22.

La forme oblongue de l'orifice 72 permet un débattement angulaire de la vis 68, dans un plan orthogonal à l'axe A2, pendant l'écartement des deux branches 38, 40 et pendant qu'elles se "referment".

La bride 28 est alors dans son état de repos non montée représenté sur la figure 3.

La bride 28 peut alors être emboîtée sur le tronçon pivotant 22, en poussant les extrémités libres des deux branches 38, 40 contre le tronçon pivotant 22, comme on l'a représenté sur la figure 4.

Les rampes 60 provoquent alors l'écartement des deux branches 38, 40 ce qui permet d'amener relativement le tronçon pivotant 22 à hauteur des encoches 50.

Les deux branches 38, 40 peuvent alors "se refermer" sur le tronçon pivotant 22, sous l'effet du rappel élastique, pour atteindre la position pincée avant serrage qui est représentée sur la figure 5.

Dans la position pincée avant serrage, qui est représentée sur la figure 5, la bride 28 est maintenue naturellement en position sur le tronçon pivotant 22, grâce au rappel élastique, sans qu'il soit nécessaire pour un opérateur de la tenir.

La bonne position angulaire autour de l'axe A2 du tronçon pivotant 22 est obtenue facilement par plaquage des surfaces d'appui 52 sur les méplats 54, sous l'effet du rappel élastique des branches 38, 40.

L'opération finale de fixation de la bride 28 sur le tronçon pivotant 22 consiste à serrer la vis 68 dans l'écrou 66, de sorte que les deux branches 38, 40 soient serrées radialement contre les méplats 54 du tronçon pivotant 22.

On constate que la bride 28 selon l'invention peut être montée par l'opérateur sur la barre anti-devers 14 au moyen d'une seule main, sans qu'il soit nécessaire d'utiliser des outils de positionnement spécifiques, en particulier pour l'indexation angulaire de la bride 28.

La bride 28 selon l'invention améliore donc l'ergonomie de montage.

Auparavant, il était indispensable de prévoir un moyen de blocage en rotation des écrous de la bride, en raison des vibrations auxquelles la bride est soumise. Il était connu par exemple d'utiliser des écrous du type Nylstop, avec frein filet intégré.

Grâce à l'agencement selon l'invention, le couple de serrage de la vis 68 suffit à la bloquer sur la bride 28. Bien entendu, selon une variante de réalisation, l'écrou 66 peut comporter un frein filet.

La réalisation de la bride 28 en acier embouti et la forme particulière de la bride 28 permettent à la fois, une flexibilité suffisante au niveau des charnières pour assurer le pincement élastique des branches 38, 40 contre le tronçon pivotant 22, et une rigidité suffisante au niveau des surfaces d'appui 52 pour assurer une résistance de la bride 28 au couple de serrage de la vis 68.

Avantageusement, à l'état de repos de la bride 28, une portion de la tige de la vis 68 est en appui contre une extrémité de l'orifice oblong 72, du côté du socle 36, sous l'effet du rappel élastique des branches 38, 40.

Ceci permet un freinage "automatique" de la vis 68 en rotation, afin d'empêcher son dévissage accidentel lors de son transport et de sa manutention.

## Revendications

1. Agencement (10) pour la liaison entre un capteur (12) angulaire et une barre anti-dévers (14) d'un véhicule automobile, du type dans lequel le capteur (12) est fixé sur la caisse (18) du véhicule et comporte un levier (20) de mesure commandé en pivotement autour de son axe (A1) par un tronçon pivotant (22) de la barre anti-devers (14), du type dans lequel le levier (20) est lié en pivotement à la barre anti-devers (14) au moyen d'une patte d'accrochage (26) portée par une bride (28) qui est fixée par serrage sur le tronçon pivotant (22), **caractérisé en ce que** la bride (28) comporte :
- un socle (36) qui porte la patte d'accrochage (26),
- une première (38) et une seconde (40) branches qui sont articulées sur le socle (36) de manière à former une pince et qui sont sollicitées élastiquement vers une position pincée sur le tronçon pivotant (22).

2. Agencement (10) selon la revendication précédente, **caractérisé en ce que** la bride (28) comporte :
- un élément d'écrou (66) qui est solidaire de la première branche (38),
- une vis de serrage (68) qui est vissée dans l'écrou (66) à travers la seconde branche (40) et qui prend appui sur une face de la seconde branche (40) de manière à maintenir par serrage les deux branches (38, 40) en position pincée sur le tronçon pivotant (22).

3. Agencement (10) selon l'une des revendications précédentes, **caractérisé en ce que** chaque branche (38, 40) comporte, à son extrémité opposée au socle (36), une rampe (60) qui commande l'écartement des branches (38, 40) lors du montage de la bride (28) sur le tronçon pivotant (22).

4. Agencement (10) selon l'une des revendications précédentes, **caractérisé en ce que** le tronçon pivotant (22) comporte au moins un méplat (54), et **en ce que** au moins une branche (38, 40) comporte une encoche (50) interne d'indexation formant une surface d'appui (52) qui vient en contact plan sur plan contre le méplat (54) en vue de permettre l'indexation angulaire de la bride (28) autour du tronçon pivotant (22) en position pincée.

5. Agencement (10) selon la revendication précédente, **caractérisé en ce que** chaque encoche d'indexation (50) comporte deux portions d'extrémité (56, 58) de profil sensiblement complémentaire du profil arrondi du tronçon pivotant (22), et une portion intermédiaire plane (52) complémentaire du méplat (54).

6. Agencement (10) selon l'une quelconque des revendications 4 ou 5, **caractérisé en ce que** chaque branche (38, 40) comporte deux ailes (46, 48) parallèles qui s'étendent globalement orthogonalement vers l'intérieur par rapport à l'axe (A2) du tronçon pivotant (22), et **en ce que** chaque aile (46, 48) comporte une encoche (50) d'indexation.

7. Agencement (10) selon l'une quelconque des revendications précédentes, **caractérisé en ce que** la seconde branche (40) comporte un orifice (72) oblong, dans le sens de la longueur de la branche (40), pour le passage de la vis de serrage (68).

8. Agencement (10) selon la revendication précédente, **caractérisé en ce que**, dans un état de repos de la bride (28), une portion de la tige de la vis (68) est en appui contre une extrémité de l'orifice (72) oblong, du côté du socle (36), sous l'effet du rappel élastique des branches (38, 40) vers la position pincée.

9. Agencement (10) selon l'une quelconque des revendications précédentes, **caractérisé en ce que** le socle (36), les branches (38, 40), et la patte d'accrochage (26) sont réalisés venus de matière en une seule pièce.

10. Agencement (10) selon la revendication précédente, **caractérisé en ce que** la bride (28) est réalisée en tôle.

11. Agencement (10) selon l'une quelconque des revendications précédentes, **caractérisé en ce que** l'élément d'écrou (66) est un écrou rapporté qui est fixé sur la première branche (38) avant le montage de la bride (28) sur la barre anti-devers (14).

12. Agencement (10) selon l'une quelconque des revendications précédentes, **caractérisé en ce qu'**il comporte une biellette (30) dont une première extrémité longitudinale (32) est articulée sur l'extrémité libre (24) du levier (20) et dont une seconde extrémité longitudinale (34) est articulée sur la patte d'accrochage (26).

## Claims

1. Arrangement (10) for connection between an angular sensor (12) and an anti-slanting bar (14) of a motor vehicle, of the type wherein the sensor (12) is secured to the body (18) of the vehicle, and comprises a measurement lever (20) with pivoting which is controlled around its axis (A1) by a pivoting section (22) of the anti-slanting bar (14), of the type wherein the lever (20) is connected in pivoting to the anti-slanting bar (14) by means of a coupling lug (26) supported by a flange (28) which is secured by being tightened onto the pivoting section (22), **characterised in that** the flange (28) comprises :
- a base (36) which supports the coupling lug (26); and
- a first (38) and a second (40) branch which are articulated on the base (36) such as to form a clamp, and which are thrust resiliently towards a clamped position on the pivoting section (22).

2. Arrangement (10) according to the preceding claim, **characterised in that** the flange (28) comprises:
- a nut element (66) which is integral with the first branch (38);
- a tightening screw (68) which is screwed into the nut (66) through the second branch (40), and is supported on a surface of the second branch (40) such as to maintain the two branches (38, 40) by tightening in the clamped position on the pivoting section (22).

3. Arrangement (10) according to one of the preceding claims, **characterised in that** each branch (38, 40) comprises at its end opposite the base (36) a ramp (60) which controls the spacing of the branches (38, 40) during the fitting of the flange (28) on the pivoting section (22).

4. Arrangement (10) according to one of the preceding claims, **characterised in that** the pivoting section (22) comprises at least one flat part (54), and **in that** at least one branch (38, 40) comprises an internal indexing notch (50) which forms a support surface (52) which comes into plane-on-plane contact against the flat part (54) in order to permit angular indexing of the flange (28) around the pivoting section (22) in the clamped position.

5. Arrangement (10) according to the preceding claim, **characterised in that** each indexing notch (50) comprises two end portions (56, 58) with a profile which is substantially complementary to the rounded profile of the pivoting section (22), and a flat intermediate portion (52) which is complementary to the flat part (54).

6. Arrangement (10) according to either of claims 4 or 5, **characterised in that** each branch (38, 40) comprises two parallel wings (46, 48) which extend globally at right-angles towards the interior relative to the axis (A2) of the pivoting section (22), and **in that** each wing (46, 48) comprises an indexing notch (50).

7. Arrangement (10) according to any one of the preceding claims, **characterised in that** the second branch (40) comprises an oblong orifice (72) in the direction of the length of the branch (40), for the passage of the tightening screw (68).

8. Arrangement (10) according to the preceding claim, **characterised in that**, in a state of rest of the flange (28), a portion of the stem of the screw (68) is supported against an end of the oblong orifice (72), on the base (36) side, under the effect of the resilient return of the branches (38, 40) towards the clamped position.

9. Arrangement (10) according to any one of the preceding claims, **characterised in that** the base (36), the branches (38, 40) and the coupling lug (26) are produced integrally in a single piece.

10. Arrangement (10) according to the preceding claim, **characterised in that** the flange (28) is made of metal plate.

11. Arrangement (10) according to any one of the preceding claims, **characterised in that** the nut element (66) is an added-on nut which is secured on the first branch (38) before the flange (28) is fitted onto the anti-slanting bar (14).

12. Arrangement (10) according to any one of the preceding claims, **characterised in that** it comprises a connecting rod (30), a first longitudinal end (32) of which is articulated on the free end (24) of the lever (20), and a second longitudinal end (34) of which is articulated on the coupling lug (26).

## Patentansprüche

1. Vorrichtung (10) zur Verbindung zwischen einem Winkelsensor (12) und einem Stabilisator (14) eines Kraftfahrzeugs, von der Art, bei der der Sensor (12) an der Fahrzeugkarosserie (18) befestigt ist und einen Messhebel (20) aufweist, der durch ein schwenkbares Teil (22) des Stabilisators (14) um seine Achse (A1) schwenkend betätigt wird, von der Art, bei der der Hebel (20) mit dem Stabilisator (14) mittels eines Verriegelungsfußes (26) schwenkbar verbunden ist, der von einem Bügel (28) getragen ist, welcher auf dem schwenkbaren Teil (22) durch Festklemmen befestigt ist,
**dadurch gekennzeichnet, dass** der Bügel (28) umfasst:
- einen Sockel (36), der den Verriegelungsfuß (26) trägt,
- einen ersten (38) und einen zweiten (40) Schenkel, die an dem Sockel (36) solchermaßen angelenkt sind, dass sie eine Zange bilden, und die auf dem schwenkbaren Teil (22) elastisch in eine Klemmstellung vorgespannt sind.

2. Vorrichtung (10) nach dem vorhergehenden Anspruch,
**dadurch gekennzeichnet, dass** der Bügel (28) umfasst:
- ein Mutterbauteil (66), das mit dem ersten Schenkel (38) fest verbunden ist,
- eine Klemmschraube (68), die durch den zweiten Schenkel (40) in die Mutter (66) geschraubt ist und die an einer Seite des zweiten Schenkels (40) solchermaßen anliegt, dass sie die beiden Schenkel (38, 40) durch Festklemmen auf dem schwenkbaren Teil (22) in Klemmstellung hält.

3. Vorrichtung (10) nach einem der vorhergehenden Ansprüche,
**dadurch gekennzeichnet, dass** jeder Schenkel (38, 40) an seinem dem Sockel (36) entgegengesetzten Ende eine Rampe (60) aufweist, die beim Anbringen des Bügels (28) auf dem schwenkbaren Teil (22) das Spreizen der Schenkel (38, 40) bewirkt.

4. Vorrichtung (10) nach einem der vorhergehenden Ansprüche,
**dadurch gekennzeichnet, dass** das schwenkbare Teil (22) wenigstens eine Abflachung (54) aufweist, und dass wenigstens ein Schenkel (38, 40) eine innere Indexierungsaussparung (50) aufweist, die eine Auflagefläche (52) bildet, welche gegen die Abflachung (54) eben anliegend in Kontakt gelangt, um die Winkelindexierung des Bügels (28) um das schwenkbare Teil (22) herum in Klemmstellung zu ermöglichen.

5. Vorrichtung (10) nach dem vorhergehenden Anspruch,
**dadurch gekennzeichnet, dass** jede Indexierungsaussparung (50) zwei Endabschnitte (56, 58) mit einem zu dem runden Profil des schwenkbaren Teils (22) im Wesentlichen komplementären Profil und ein zu der Abflachung (54) komplementäres ebenes Zwischenstück (52) aufweist.

6. Vorrichtung (10) nach einem der Ansprüche 4 oder 5,
**dadurch gekennzeichnet, dass** jeder Schenkel (38, 40) zwei parallele Seitenteile (46, 48) aufweist, die sich bezüglich der Achse (A2) des schwenkbaren Teils (22) allgemein orthogonal nach innen erstrecken, und dass jedes Seitenteil (46, 48) eine Indexierungsaussparung (50) aufweist.

7. Vorrichtung (10) nach einem der vorhergehenden Ansprüche,
**dadurch gekennzeichnet, dass** der zweite Schenkel (40) in Längsrichtung des Schenkels (40) eine längliche Öffnung (72) zum Hindurchführen der Klemmschraube (68) aufweist.

8. Vorrichtung (10) nach dem vorhergehenden Anspruch,
**dadurch gekennzeichnet, dass** im Ruhezustand des Bügels (28) ein Stück des Schafts der Schraube (68), unter der Einwirkung der elastischen Vorspannung der Schenkel (38, 40) in die Klemmstellung, an der Seite des Sockels (36) an einem Ende der länglichen Öffnung (72) in Anlage ist.

9. Vorrichtung (10) nach einem der vorhergehenden Ansprüche,
**dadurch gekennzeichnet, dass** der Sockel (36), die Schenkel (38, 40) und der Verriegelungsfuß (26) als ein Materialstück ausgebildet sind.

10. Vorrichtung (10) nach dem vorhergehenden Anspruch,
**dadurch gekennzeichnet, dass** der Bügel (28) aus Blech ausgeführt ist.

11. Vorrichtung (10) nach einem der vorhergehenden Ansprüche,
**dadurch gekennzeichnet, dass** das Mutterbauteil (66) eine aufgesetzte Mutter ist, die vor dem Anbringen des Bügels (28) auf dem Stabilisator (14) auf dem ersten Schenkel (38) befestigt wird.

12. Vorrichtung (10) nach einem der vorhergehenden Ansprüche,
**dadurch gekennzeichnet, dass** sie einen Schwingarm (30) umfasst, dessen erstes Längsende (32) an dem freien Ende (24) des Hebels (20) angelenkt ist und dessen zweites Längsende (34) an dem Verriegelungsfuß angelenkt ist.
